# EUROPEAN PATENT SPECIFICATION

(11) **EP 3 209 889 B1**
(45) Date of publication and mention of the grant of the patent: **05.08.2020**
(21) Application number: 15791330.2
(22) Date of filing: 20.10.2015
(51) Int. Cl.: F16B 7/20, F16L 3/24

(54) **IMPROVEMENTS IN OR RELATING TO CONNECTING DEVICES**
VERBESSERUNGEN AN ODER IM ZUSAMMENHANG MIT VERBINDUNGSVORRICHTUNGEN
AMÉLIORATIONS APPORTÉES À DES DISPOSITIFS DE RACCORDEMENT

(30) Priority: 22.10.2014 GB 201418811; 03.11.2014 GB 201419593; 16.10.2015 GB 201518343
(43) Date of publication of application: 30.08.2017
(73) Proprietor: Gripple Limited, Sheffield, South Yorkshire S4 7UQ (GB)
(72) Inventor: SOMERFIELD, Alan, Lincoln Lincolnshire LN6 8HZ (GB)
(86) International application number: PCT/GB2015/000290
(87) International publication number: WO 2016/062993

(56) References cited:
- EP-A1- 2 058 531
- EP-A2- 1 441 428
- DE-A1- 1 750 650
- FR-A1- 2 517 411
- GB-A- 972 995
- JP-U- H0 292 182
- US-A- 4 192 478
- US-A1- 2007 257 159
- US-A1- 2010 264 278

## Description

This invention relates to connecting arrangements comprising connecting devices and supports. More particularly, but not exclusively, this invention relates to connecting arrangements for suspending pipes from supports.

It is often necessary to suspend articles from ceilings or roofs. This is carried out by securing struts in the roof, and thereafter attaching threaded rods to the struts with nuts screwed thereon. The articles are then attached to the threaded rods. GB 972 995 A discloses a fastening device comprising a rod having a transversely extending elongate head at one end and spaced from the head, an annular flange which will yield in the longitudinal direction of the rod. The head is also provided with a prong at each end thereof directed towards the flange. The rod can be inserted through an aperture in a panel, and then turned through 90 degrees by a key 21 so that the head lies across the aperture 11 and the flange resiliently abuts the other face of the panel.

Another fastening device is known from JP H02 92182 U.

According to one aspect of this invention, there is provided a method of suspending a pipe from a support, the method comprising:
providing a connecting device and an elongate support comprising a main part defining an aperture, the connecting device comprising a securing arrangement for securing the connecting device to the pipe, and an attaching arrangement for attaching the connecting device to the support;
wherein the attaching arrangement comprises a first projecting formation for engaging a first face of a portion of the support, a second projecting formation for engaging a second face of said portion of the support, and a bridging element extending between the first projecting formation and the securing arrangement;
wherein the attaching arrangement further includes a spacer portion extending between the first and second projecting formations, a gap being defined between the first and second projecting formations;
wherein the spacer portion has a stop formation to prevent rotation of the attaching arrangement in a direction, the stop formation comprising a region of the spacer portion configured to engage the support when the attaching arrangement is rotated in the aforesaid direction;
wherein the method comprises inserting the second projecting formation through the aperture in the support, and thereafter rotating the attaching arrangement to an attaching position about an axis of rotation extending through the first and second projecting formations, to receive said portion of the support between the first and second projecting formations so that the first and second projecting formations respectively engage the first and second faces, thereby attaching the connecting device to the support;
and wherein the method further comprises securing the pipe to the securing arrangement;
characterised in that the bridging element fixedly mounts the securing arrangement on the attaching arrangement.

According to another aspect of this invention, there is provided a connecting arrangement comprising:
a connecting device, and a support comprising a main part defining an aperture, the connecting device comprising a securing arrangement for securing the connecting device to the pipe, and an attaching arrangement for attaching the connecting device to the support;
wherein the attaching arrangement comprises a first projecting formation for engaging a first face of a portion of the support, a second projecting formation for engaging a second face of said portion of the support, and a bridging element extending between the first projecting formation and the securing arrangement;
wherein the attaching arrangement further includes a spacer portion extending between the first and second projecting formations so that a gap is defined between the first and second projecting formations;
wherein the spacer portion has a stop formation to prevent rotation of the attaching arrangement in a direction, the stop formation comprising a region of the spacer portion configured to engage the support when the attaching arrangement is rotated in the aforesaid direction;
wherein the second projecting formation can be inserted through the aperture in the support, and when so inserted the the attaching arrangement is rotatable to the attaching position about an axis of rotation extending through the first and second projecting formations, to receive said portion of the support between the first and second projecting formations so that the first and second projecting formations respectively engage the first and second faces, thereby attaching the connecting device to the support;
characterised in that the bridging element fixedly mounts the securing arrangement on the attaching arrangement.

The connecting arrangement may comprise a plurality of the connecting devices, which can be attached to the support.

The support may be an elongate support, such as a strut. Alternatively, the support may comprise an intermediate mounting clip for mounting the connecting device to a support.

The intermediate mounting clip may comprise two opposed resiliently movable portions, the resiliently movable portions being resiliently movable to effect engagement with the support thereby fastening the intermediate mounting clip to the support, wherein each resiliently movable portion has an attaching formation thereon, said attaching formation being cooperable with the attaching arrangement on the connecting device to attach the connecting device to the intermediate mounting clip. The aforesaid portion of the intermediate mounting clip may be received between the first and second projecting formations on rotating the attaching arrangement to an attaching position when the second projecting formation is inserted through the support or between the resiliently movable portions. The second projecting formation may extend across the first projecting formation.

The rotation of the attaching arrangement may be effected by rotation of the connecting device about the aforesaid axis of rotation.

The bridging element may be elongate.

The bridging element may have a central axis. The axis of rotation may be offset relative to the central axis of the bridging element. The axis of rotation may be substantially parallel to the central axis of the bridging element.

The first projecting formation may extend outwardly from the bridging element. The second projecting formation may extend outwardly from the spacer portion. The second projecting formation may extend from the spacer portion in opposite directions relative thereto.

The second projecting formation may have a leading surface and a securing region. The leading surface may be the first region of the second projecting formation to pass over the aforesaid portion of the support or intermediate mounting clip when the attaching arrangement is rotated to the attaching position. The attaching surface may engage the support or intermediate mounting clip when the attaching arrangement is in the attaching position.

The gap may be larger at the leading surface than at the attaching surface. The leading surface may have a surface that tapers to the attaching surface.

The first projecting formation may extend radially from the bridging element, and may be substantially circular. The second projecting formation may be substantially rectangular having a width greater than its length.

The aperture in the support or intermediate mounting clip may be elongate and may have a length greater than the length of the second projecting formation. The width of the aperture in the support, or the distance between the attaching formations on the resiliently movable portions, may be greater than the width of the second projecting formation. The length of the second projecting formation may be greater than the width of the aperture, or the distance between the attaching formations on the resiliently movable portions.

The stop formation may comprise diagonally opposite regions of the spacer portion, the distance between said regions being greater than the width of the aperture.

The spacer portion may have a curved edge to allow rotating of the attaching arrangement relative to the support or intermediate mounting clip. The spacer portion may have diametrically opposed curved edges, wherein the diametrical distance between said curved edges is less than the width of the aperture in the support or intermediate mounting clip.

The securing arrangement may comprise any suitable securing arrangement for securing the article to the connecting device. An example of such a securing arrangement is disclosed in published GB patent specification number GB2473320.

The intermediate mounting clip may comprise a main part, which may include the resiliently movable portions. The main part may be resiliently deformable to move the resiliently movable portions into engagement with the support.

The main part may have a central portion extending between the two resiliently movable portions. Both resiliently movable portions may extend in the same direction from the central portion. The main part may have a substantially 'U' shaped end profile. Each resiliently movable portion may comprise a leaf extending from the central portion. Each of the resiliently movable portions may comprise a respective leaf extending from the central portion.

The attaching formation on each resiliently movable portion may comprise an inwardly extending member to engage the attaching arrangement on the connecting device. The inwardly extending member may have a first surface to engage the first projecting formation. The first surface may be a substantially planar first surface.

The inwardly extending member may have a second surface to engage the second projecting formation. The second surface may be a substantially planar second surface.

The first and second surfaces may be first and second opposite faces of the inwardly extending member. Each inwardly extending member may extend transverse to the respective resiliently movable portion. Thus, the connecting device may be rotated to the attaching position to receive the inwardly extending members between the first and second projecting formations.

An end stop may be provided on one end of each of the inwardly extending member. The inwardly extending members may be arranged substantially opposite each other, so that rotation of the attaching arrangement moves the first and second projecting formations into engagement with the attaching formation.

The end stop on the first inwardly extending member may be on the opposite end thereof to the end stop on the second inwardly extending member. The second projecting formation may engage the end stops when the attaching arrangement is in the attaching position.

A respective aperture may be defined by each of the first and second resiliently movable portions adjacent each inwardly extending member. Each aperture may be defined in a position to receive the first projecting formation.

The intermediate mounting clip may further include fastening means to fasten the intermediate mounting clip to the support. The fastening means may be provided on the resiliently movable portions. The fastening means may be provided on each resiliently movable portion.

The fastening means may comprise a plurality of fastening elements, which may extend outwardly from the respective resiliently movable portion. Each resiliently movable portion may have distal free edge spaced from the central portion. Each resiliently movable portion may have two opposite side edges extending between the distal edges and the central portion.

The fastening means on each resiliently movable portion may comprise an inner fastening element and an outer fastening element. The outer fastening element may be provided adjacent the distal edge of the resiliently movable portion. The inner fastening element may be provided between the outer fastening element and the central portion.

The fastening means may comprise two sets of the inner and outer fastening elements on each of the resiliently movable portions. Each set may be provided on a respective side edge of the resiliently movable portions.

When the intermediate mounting clip is attached to the support, inwardly extending portions of the support are received between the inner and outer fastening elements.

Reference is now made to the accompanying drawings, in which:
Figure 1 is a perspective view of a connecting device;
Figure 2 shows an embodiment of a connecting arrangement comprising a connecting device and a support;
Figure 3 is a perspective view of the connecting arrangement of Figure 2, showing the connecting device is being attached to the support;
Figure 4 is a perspective view of the connecting arrangement of Figure 2, showing the connecting device attached to the support;
Figure 5 is a view along the lines A - A in Figure 1.
Figure 6 is a top perspective view of a connecting device, an intermediate mounting clip and a further support;
Figure 7 is a bottom perspective view of the connecting device, the intermediate mounting clip and the further support shown in Figure 6;
Figure 8 is a sectional side view of the connecting device, the intermediate mounting clip and the further support shown in Figure 6;
Figure 9 is a top perspective view of the connecting device attached to the intermediate mounting clip before insertion into the further support;
Figure 10 is a sectional side view of the connecting device attached to the intermediate mounting clip before insertion into the further support;
Figure 11 is a top perspective view of the connecting device attached to the intermediate mounting clip after insertion into the further support;
Figure 12 is a sectional side view of the connecting device attached to the intermediate mounting clip after insertion into the further support;
Figure 13 is a top perspective view of the connecting device attached to the intermediate mounting clip after the connecting device has been rotated to mount the connecting device on the further support;
Figure 14 is a sectional side view of the connecting device attached to the intermediate mounting clip after the connecting device has been rotated to mount the connecting device on the further support; and
Figure 15 is a close up view of an attaching arrangement of a further connecting device.

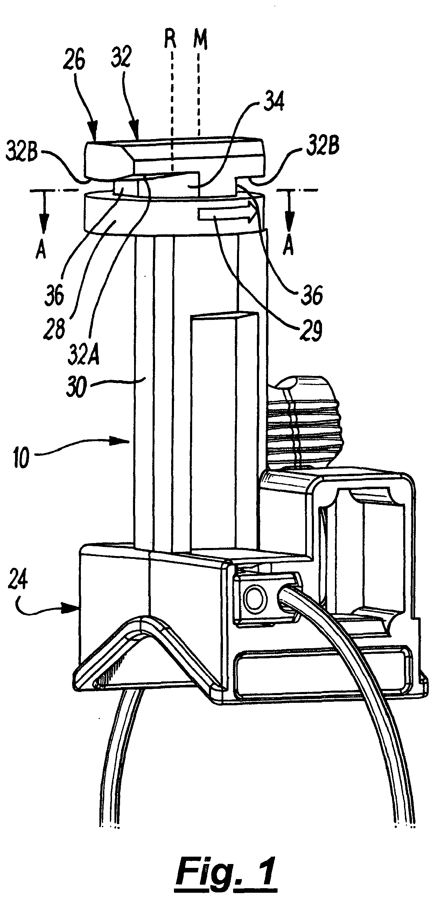

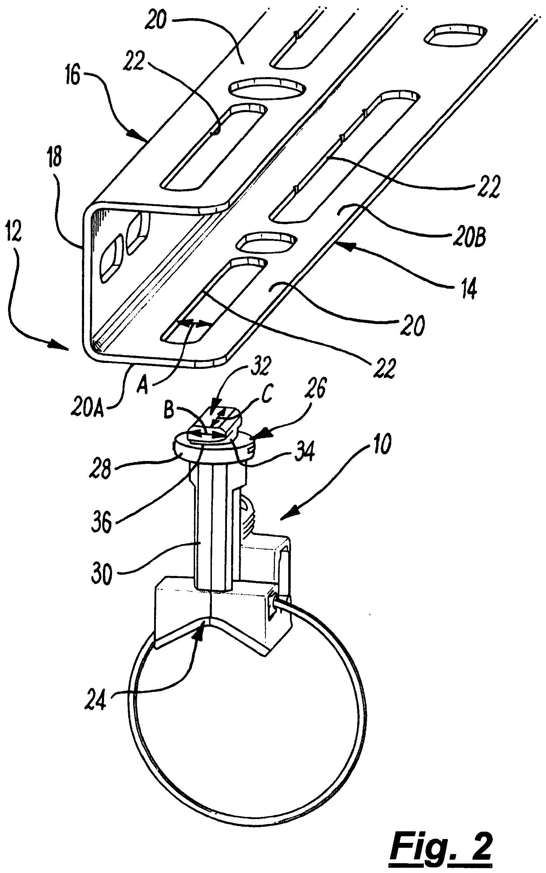

Figure 1 shows a connecting device 10 for use as part of a connecting arrangement 12 (see Figures 2 to 4). The connecting arrangement 12 comprises the connecting device 10 and a carrier in the form of an elongate support 14.

The support 14 is in the form of an elongate strut comprising a main part 16 being formed of an elongate central strip 18 and two elongate substantially parallel transverse strips 20 extending from opposite edges of the central strip 18 so that the support 14 has an end profile that is substantially U shaped.

Apertures in the form of elongate slots 22 are defined in the transverse strips 20 and in the central strip 18. The support 14 can be installed in the roof or ceiling of a building so that articles, for example pipes, can be suspended therefrom.

The connecting device 10 is provided to connect the article to the support 14, and comprises a securing arrangement 24 for securing the article to the connecting device 10 and an attaching arrangement 26 for attaching the connecting device 10 to the support. The securing arrangement 24 can be any suitable securing arrangement. In the embodiment shown, the securing arrangement 24 is similar to the securing arrangement 24 published in patent specification No. GB2473320.

The attaching arrangement 26 comprises a first projecting formation 28 and a bridging element 30 extending from the first projecting formation 28 to the securing arrangement 24. The bridging element 30 has a central main axis M. The attaching formation has an axis of rotation R that is offset from, and parallel to, the central main axis M.

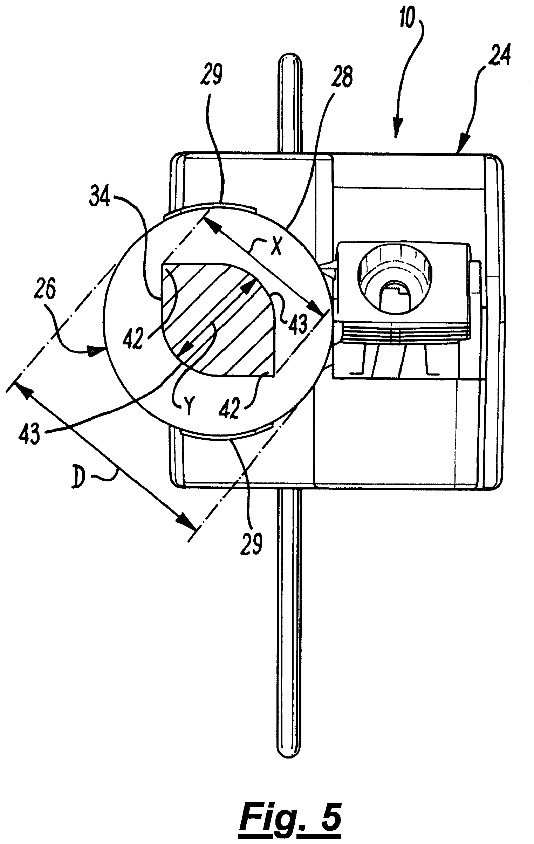

The first projecting formation 28 is substantially circular in configuration having a diameter D (see Figure 5) which is greater than the width A of the slots 22 in the support 14. An indicator arrow 29 is marked on the first projecting formation 28 to indicate the direction in which the attaching arrangement should be rotated to attach the connecting device 10 to the support 14, as explained below.

The attaching arrangement 26 further includes a second projecting formation 32 and a spacer portion 34 between the first and second projecting formations 28, 32, whereby a gap 36 is defined between the first and second projecting formations 28, 32 on each side of the spacer portion 34. The size of each gap 36 is substantially equal to, or greater than, the thickness of the central strip 18 and the transverse strips 20, thereby allowing regions of the support 14 to be received in the gap 32.

The second projecting formation 32 has a substantially rectangular shape, and projects from the spacer portion 34 on opposite sides thereof across the first projecting formation 28. The second projecting formation 32 has a width B that is less than the width A of the elongate slots 22 in the support 14, and a length C that is greater than the width A of the elongate slots 22 in the support 14.

In use, the attaching arrangement 26 is inserted into one of the elongate slots 22, for example, in one of the transverse strips 20 of the support 14, so that the first and second projecting formations 28, 30 are disposed on opposite first and second faces 20A, 20B of the transverse strip 20. In this position, the spacer portion 32 extends through the slot 22.

The attaching arrangement 26 can only be inserted into the slot until the circular first projecting formation 28 engages a first face 20A of the transverse strip 20. When so engaged, the second projecting formation 32 is disposed in engagement with the opposite second face 20B.

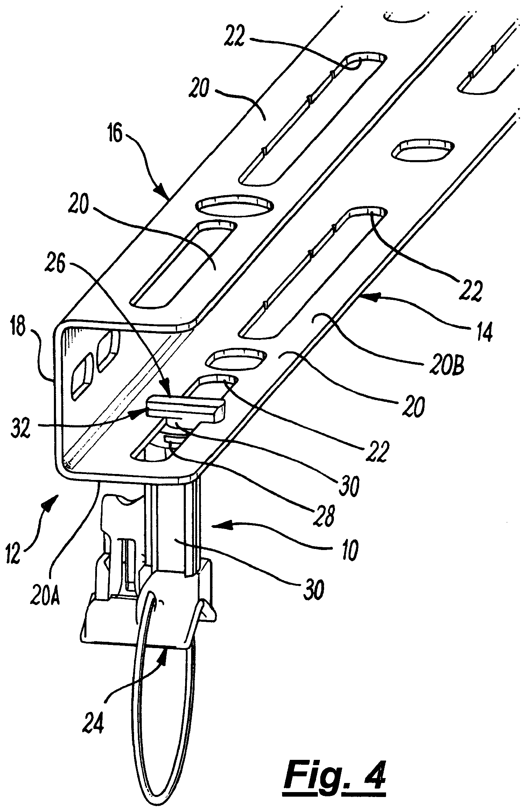

The attaching arrangement 26 is rotated about the axis of rotation R in the direction indicated by the arrow 29 to an attaching position (see Figure 4), in which the second projecting formation 32 is disposed over the aforesaid regions of the transverse strip 20.

Referring to Figure 1, the second projecting formation 32 has a leading surface 32A and an attaching surface 32B. The leading surface 32A is the first surface of the second projecting formation 32 to pass over the aforesaid region of the transverse strip 20 when the attaching arrangement 26 is rotated in the direction indicated by the arrow 29 to the attaching position.

The attaching surface 32B engages the transverse strip 20 when the attaching arrangement 26 is in the attaching position. The gap 36 is larger at the leading surface 32A than at the attaching surface 32B. The leading surface 32A tapers to the attaching surface 32B.

The securing arrangement 24 is fixedly mounted on the attaching arrangement 26 by the bridging element 30. Thus, rotating the attaching arrangement 26 rotates the connecting device 10. The connecting device 10 can be rotated by 90° about its axis of rotation R.

In the embodiment shown, the axis of rotation R is offset from the central main axis M of the bridging element 30. If desired, in an alternative embodiment, the axis of rotation can be coaxial with the central axis.

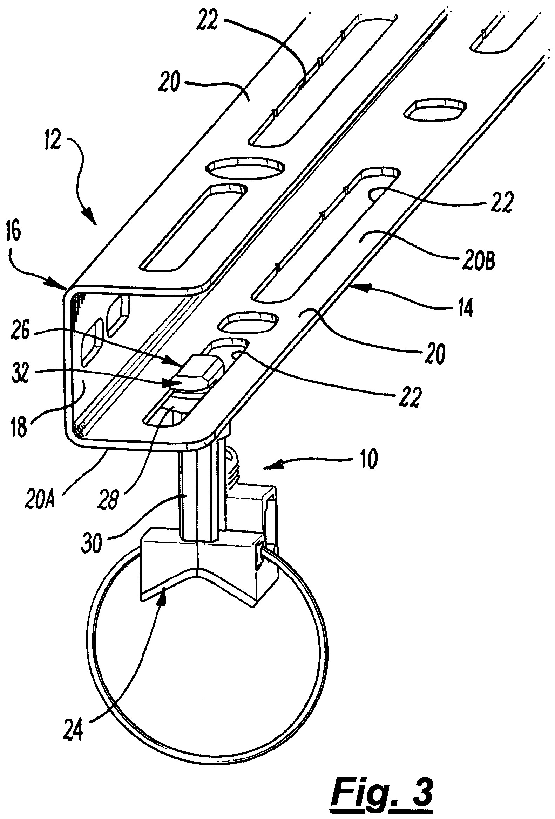

When so rotated, the second projecting formation 32 moves from the position in which the second projecting formation 32 extends parallel to the elongate slot 22, as shown in figure 3, to the position where it extends at right angles to the elongate slot 22, as shown in Figure 4.

In the position shown in Figure 4, a region of the transverse strip 20 adjacent the edge of the elongate slot 22 is received in the gap 36 between the first and second projecting formations 28, 32. When so disposed, the attaching arrangement 26 and the connecting device 10 are attached to the support 14.

Referring to Figure 5, the spacer portion 34 is provided with a stop formation 40 in the form of diametrically opposed corner regions 42. The spacer portion 40 has opposite sides 43 that are convexly curved and extend between the opposite corner regions 42.

The spacer portion 34 has a main dimension X between the corner regions 42, wherein the length of the dimension X is greater than the width A of the elongate slot 22.

The spacer portion 34 has a transverse dimension Y between the opposite sides 43, the transverse dimension Y being at a right angle to the dimension X. The length of the transverse dimension Y is less than the width A of the elongate slot 22. As a result, the connecting device 10 can only be rotated in one direction (as indicated by the arrows 29) when the attaching arrangement 26 is inserted through the elongate slot 22.

The connecting arrangement 12 comprises a plurality of the connecting devices 10 attached to the support 14 at spaced slots 22 along the support 14. Thus, the plurality of the connecting devices 10 connect the article (for example a pipe) to the support 14.

There is thus described a connecting device 10 for connecting an article to a support 14, which provides a simple and efficient means for connecting the article to the support 14.

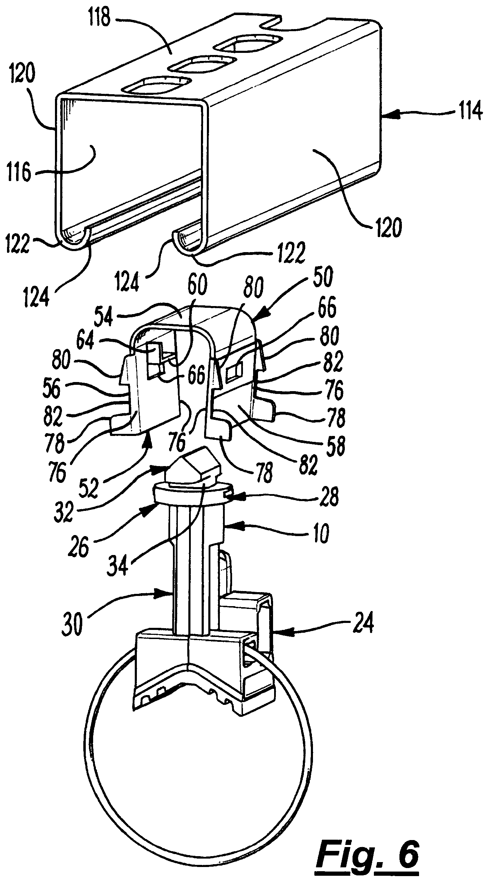

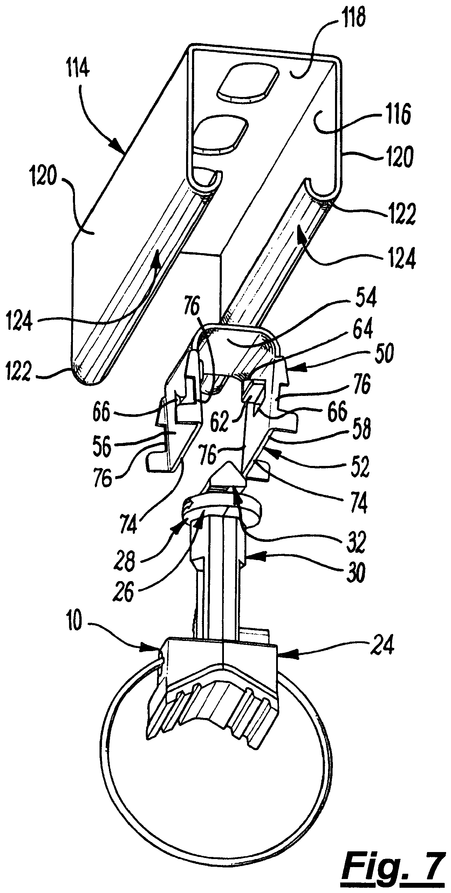

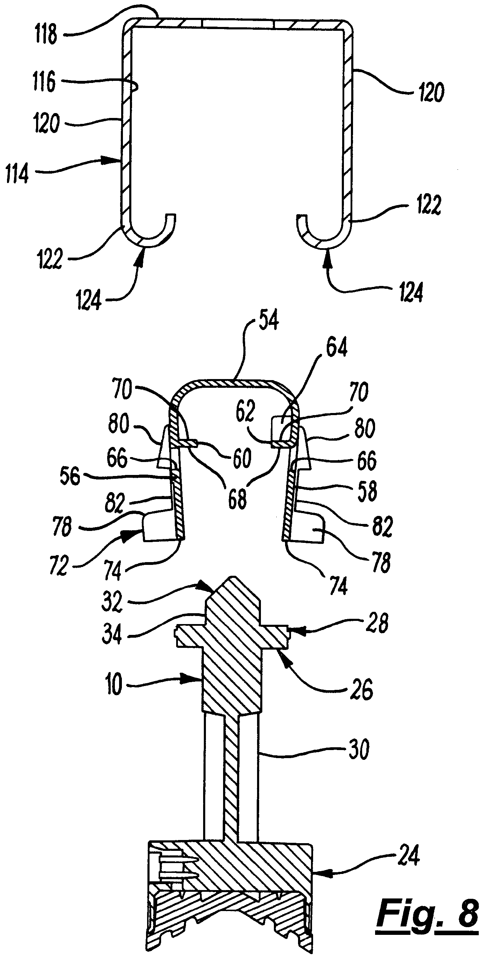

Figures 6 to 14 show a connecting device used in an arrangement outside of the scope of the claims. An intermediate mounting clip 50 is provided where the connecting device 10 is to be mounted on a further support 114 a defining a recess 116 between a central strip 118 and a pair of transverse strips 120 extending from the central strip 118. Each of the transverse strips 120 has a free edge region 122 comprising an inwardly curved edge portion 124. The further support 114 is known in the art as a unistrut. In such a case, it is not possible to attach the connecting device 10 directly to the further support 114. The connecting device 10 is attached to a carrier in the form of the intermediate mounting clip 50, which is used to mount the connecting device 10 within the recess 116 defined by the further support 114.

The connecting device 10 shown in Figures 6 to 14 is the same as the connecting device 10 shown in Figures 1 to 5 and the features of the connecting device 10 in Figures 6 to 14 have been designated with the same reference numerals as the corresponding features in Figures 1 to 5.

The intermediate mounting clip 50 comprises a resiliently deformable main part 52 which has a substantially 'U' shaped end profile. The main part 52 comprises a central portion 54 and two resiliently movable portions in the form of two leaves 56, 58. The leaves 56, 58 extend from the central portion 54 in the same direction, and are disposed opposite each other.

Each of the leaves 56, 58 has an attaching formation in the form of an inwardly extending member 60, 62 in the form of a substantially flat strip. The inwardly extending members 60, 62 are arranged opposite each other.

The diameter D (see Figure 5) of the circular first projecting formation 28 is greater than the distance between the inwardly extending members 60, 62. The width B (see Figure 2) of the second projecting formation 32 is less than the distance between the inwardly extending members 60, 62. Also, the length C of the second projecting formation 32 is greater than the distance between the inwardly extending members 60, 62.

A stop member 64 is provided at the opposite end of each inwardly extending member 60, 62. The stop member 64 on one of the inwardly extending members 60 is disposed at the opposite end thereof to the stop member 64 on the other inwardly extending member 62.

Each of the leaves 56, 58 defines a rectangular aperture 66 adjacent the respective inwardly extending member 60, 62. The apertures 66 are defined in the leaves 56, 58 opposite each other. In the orientation of the intermediate mounting clip 50 shown in Figures 6 to 14, the rectangular apertures 66 are defined beneath the respective inwardly extending members 60, 62.

Each of the inwardly extending members 60, 62 has first and second opposite faces 68, 70 having substantially planar surfaces. The first face 68 faces the rectangular aperture 66, and the second face 70 faces the central portion 54.

The leaves 56, 58 are provided with fastening means 72 to fasten the intermediate mounting clip 50 to the further support 114. Each of the leaves 56, 58 has a distal edge 74 spaced from the central portion 54, and a pair of side edges 76 extending from the distal edge 74 to the central portion 54.

The fastening means 72 are provided on each of the side edges 76 of the leaves 56, 58. The fastening means 72 comprises outer and inner fastening elements 78, 80 on each of the side edges 76.

Each outer fastening element 78 is provided on the side edges 76 of the leaves 56, 58 adjacent the distal edges 74. Each inner fastening element 80 is provided on the side edges 76 of the leaves 56, 58 between the distal edges 74 and the central portion 54.

Each of the outer fastening elements 78 is substantially flat and rectangular in shape, and each of the inner fastening elements 80 is substantially flat and triangular in shape. A respective web element 82 extends between the inner and outer fastening elements 78, 80.

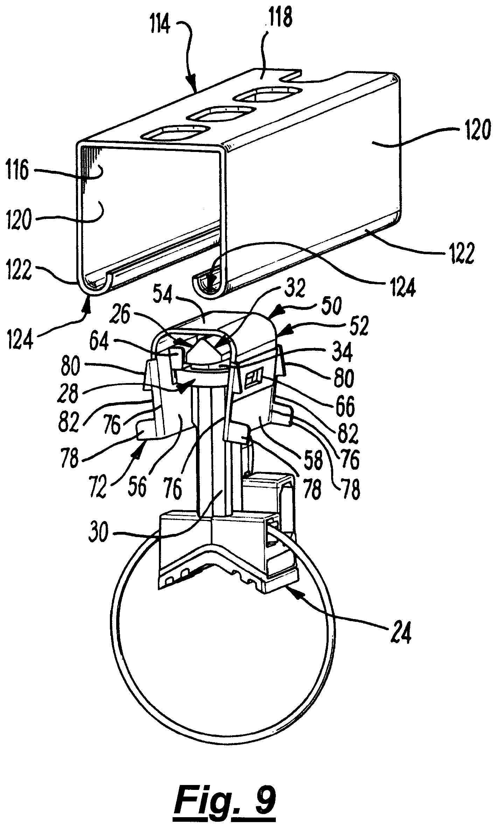

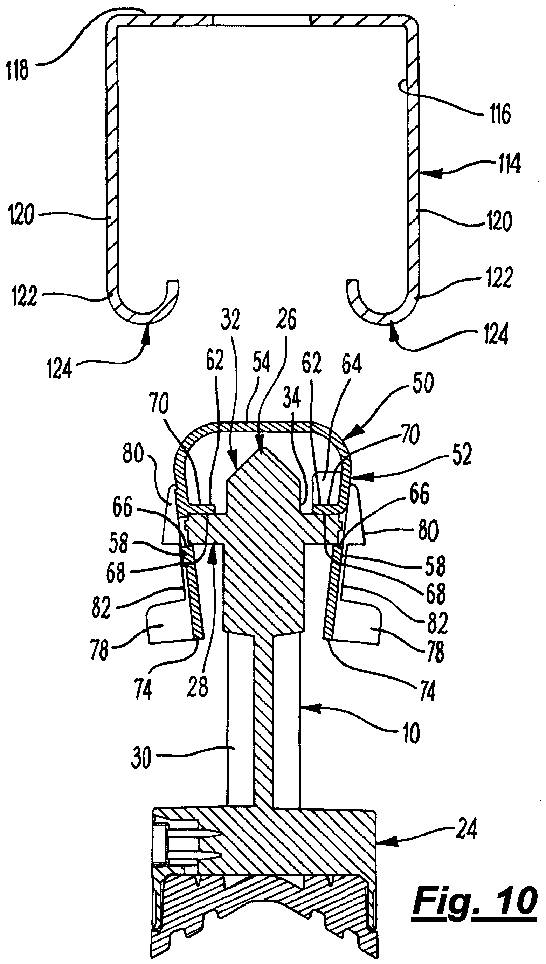

In order to mount the connecting device 10 on the support 114, the connecting device is attached to the intermediate mounting clip 50 (see Figures 9 and 10). In order to do so, the attaching arrangement 26 is oriented so that the second projecting formation 32 can pass between the inwardly extending members 60, 62. The attaching arrangement 26 is then inserted between the leaves 56, 58 until the first projecting formation 28 engages the first face 68 of each inwardly extending member 60, 62.

In this position, the first projecting formation 28 is partially received in each of the opposite apertures 66, thereby holding the connecting device 10 on the intermediate mounting clip 50.

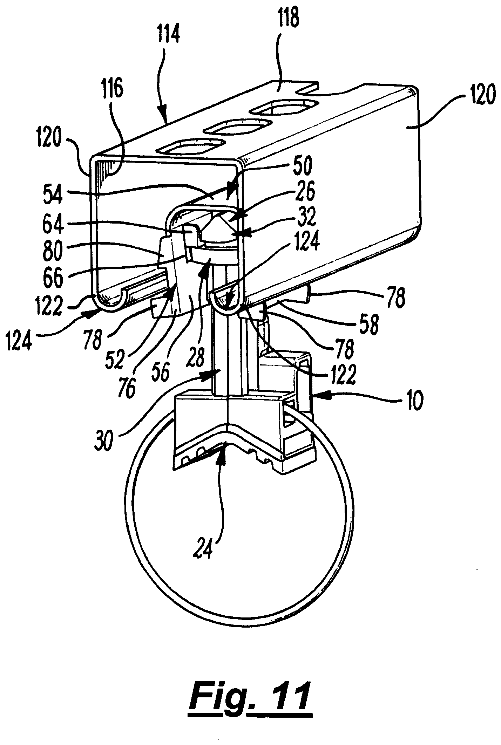

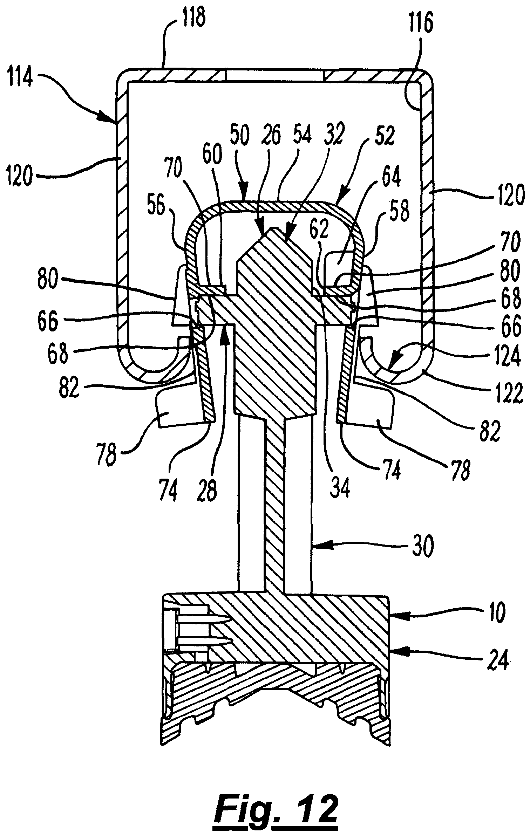

The intermediate mounting clip 50, with the connecting device 10 held thereon, is inserted into the recess defined by the further support 114 so that the leaves 56, 58 engage the transverse strips 120 (see Figures 11 and 12). The inwardly curved edge portions 124 are received between the outer and inner fastening elements 78, 80 on each of the side edges 76, thereby holding the intermediate mounting clip 50 on the further support 114.

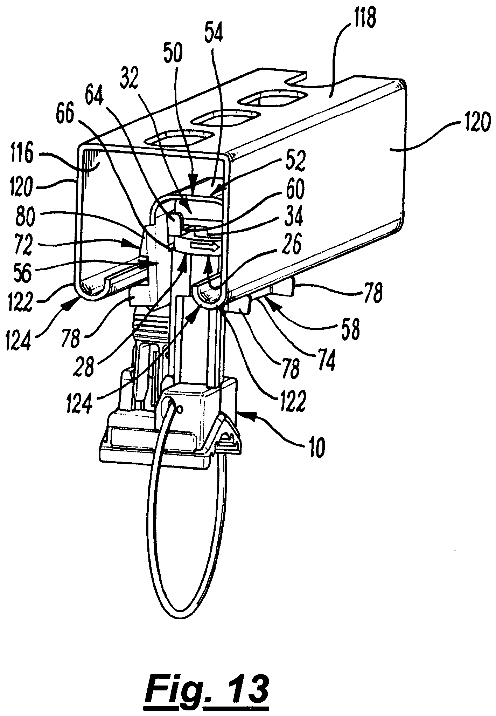

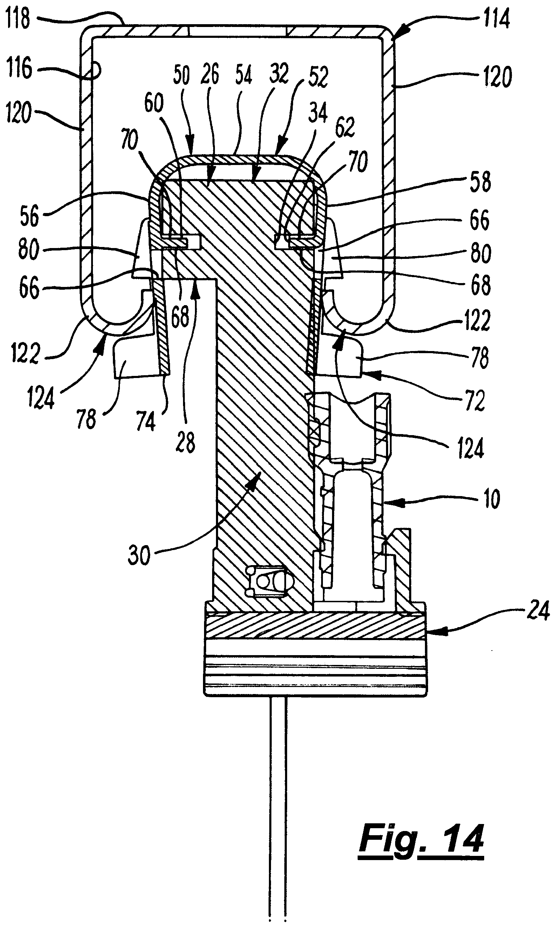

The connecting device 10 can then be rotated about its axis of rotation R to the position shown in Figures 13 and 14, in which the second projecting formation 32 is rotated across the second faces 70 of the inwardly extending members 60, 62 into engagement therewith. The connecting device 10 is rotated until the second projecting formation 32 engages both of the stop members 64.

Rotation of the connecting device 10 causes the second projecting formation 32 to rotate into engagement with the leaves 56, 58, urging the leaves 56, 58 outwardly into tighter engagement with the transverse strips 120 of the further support 114. The outer and inner fastening elements 78, 80 engage the inwardly curved edge portions 124, and prevent the intermediate mounting clip from being dislodged from the further support 114.

As a result, the intermediate mounting clip 50 allows the connecting device to be mounted on the further support, thereby allowing the connecting device 10 to connect an article to the further support 114.

Various modifications can be made without departing from the scope of the invention. For example, as mentioned above, the securing arrangement 24 can be any other suitable securing arrangement.

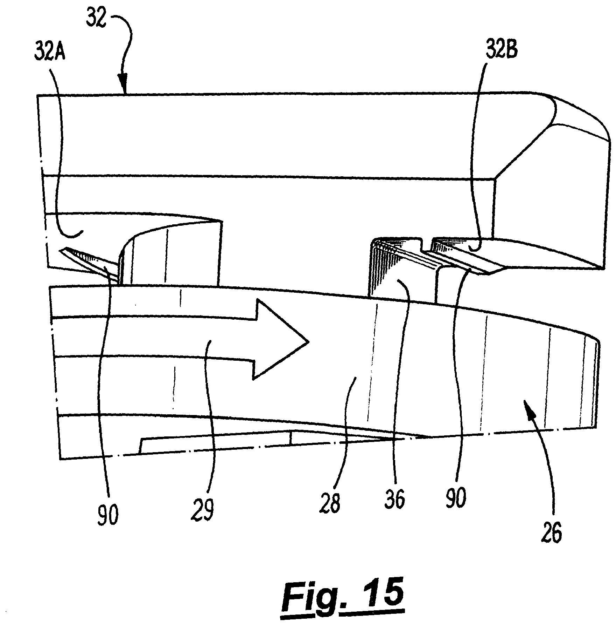

A further modification is shown in Figure 15, which is the same as the connecting device 10 shown above, with the exception that crush ribs 90 are provided on the second projecting portion 32 and extend from the leading surface 32A to the attaching surface 32B.

The crush ribs 90 are provided to accommodate differences in the thickness of the elongate central strip 18 of the support 14. Central strips 18 having a larger thickness crush the ribs 90, whereas central strips 18 having a smaller thickness engage the ribs 90.

## Claims

1. A method of suspending a pipe from a support (14), the method comprising:
providing a connecting device (10) and a support (14) comprising a main part (16) defining an aperture (22), the connecting device (10) comprising a securing arrangement (24) for securing the connecting device (10) to the pipe, and an attaching arrangement (26) for attaching the connecting device (10) to the support (14);
wherein the attaching arrangement (26) comprises a first projecting formation (28) for engaging a first face (20A) of a portion of the support (14), a second projecting formation (32) for engaging a second face (20B) of said portion of the support (14), and a bridging element (30) extending between the first projecting formation (28) and the securing arrangement (24);
wherein the bridging element (30) fixedly mounts the securing arrangement (24) on the attaching arrangement (26);
wherein the attaching arrangement (26) further includes a spacer portion (34) extending between the first and second projecting formations (32), a gap (36) being defined between the first and second projecting formations (32);
wherein the method comprises inserting the second projecting formation (32) through the aperture (22) in the support (14), and thereafter rotating the attaching arrangement (26) to an attaching position about an axis of rotation (R) extending through the first and second projecting formations (32), to receive said portion of the support (14) between the first and second projecting formations (32) so that the first and second projecting formations (32) respectively engage the first and second faces (20B), thereby attaching the connecting device (10) to the support (14);
and wherein the method further comprises securing the pipe to the securing arrangement (24);
**characterised in that** the spacer portion (34) has a stop formation (40) to prevent rotation of the attaching arrangement (26) in one direction, the stop formation (40) comprising a region of the spacer portion (34) configured to engage the support (14) when the attaching arrangement (26) is rotated in the aforesaid direction.

2. A method according to claim 1, wherein the bridging element (30) has a central axis (M), the axis of rotation (R) being offset relative to the central axis (M) of the bridging element (30), and wherein the axis of rotation (R) is substantially parallel to the central axis (M) of the bridging element (30).

3. A method according to claim 1 or 2 wherein the first projecting formation (28) extends outwardly from the bridging element (30), and the second projecting formation (32) extends outwardly from the spacer portion (34) in opposite directions relative thereto.

4. A method according to claim 3, wherein the second projecting formation (32) has a leading surface (32A) and an attaching surface (32B), the leading surface (32A) being the first region of the second projecting formation (32) to pass over the aforesaid portion of the support (14) when the attaching arrangement (26) is rotated to the attaching position, and wherein the attaching surface (32B) engages the support (14) when the attaching arrangement (26) is in the attaching position.

5. A method according to claim 4, wherein the gap (36) is larger at the leading surface (32A) than at the attaching surface (32B), the leading surface (32A) having a surface that tapers to the attaching surface (32B).

6. A method according to any preceding claim, wherein the stop formation (40) comprises diagonally opposite regions of the spacer portion (34), the distance between said regions being greater than the width of the aperture (22).

7. A method according to any preceding claim, wherein the spacer portion (34) has a curved edge to allow rotating of the attaching arrangement (26) relative to the support (14), the spacer portion (34) preferably having substantially diametrically opposed curved edges, the diametrical distance between said curved edges being less than the width of the aperture (22) in the support (14).

8. A method according to any preceding claim, wherein the first projecting formation (28) is substantially circular and extends radially from the bridging element (30), and the second projecting formation (32) is substantially rectangular having a width greater than its length.

9. A connecting arrangement comprising:
a connecting device (10), and a support (14) comprising a main part (16) defining an aperture (22), the connecting device (10) comprising a securing arrangement (24) for securing the connecting device (10) to a pipe, and an attaching arrangement (26) for attaching the connecting device (10) to the support (14);
wherein the attaching arrangement (26) comprises a first projecting formation (28) for engaging a first face (20A) of a portion of the support (14), a second projecting formation (32) for engaging a second face (20B) of said portion of the support (14), and a bridging element (30) extending between the first projecting formation (28) and the securing arrangement (24);
wherein the bridging element (30) fixedly mounts the securing arrangement (24) on the attaching arrangement (26);
wherein the attaching arrangement (26) further includes a spacer portion (34) extending between the first and second projecting formations (32) so that a gap (36) is defined between the first and second projecting formations (32);
wherein the second projecting formation (32) can be inserted through the aperture (22) in the support (14), and when so inserted the attaching arrangement (26) is rotatable to the attaching position about an axis of rotation (R) extending through the first and second projecting formations (32), to receive said portion of the support (14) between the first and second projecting formations (32) so that the first and second projecting formations (32) respectively engage the first and second faces (20B), thereby attaching the connecting device (10) to the support (14);
**characterised in that** the spacer portion (34) has a stop formation (40) to prevent rotation of the attaching arrangement (26) in one direction, the stop formation (40) comprising a region of the spacer portion (34) configured to engage the support (14) when the attaching arrangement (26) is rotated in the aforesaid direction.

10. A connecting arrangement according to claim 9, wherein the bridging element (30) has a central axis (M), the axis of rotation (R) being offset relative to the central axis (M) of the bridging element (30), and wherein the axis of rotation (R) is substantially parallel to the central axis (M) of the bridging element (30).

11. A connecting arrangement according to claim 9 or 10, wherein the first projecting formation (28) extends outwardly from the bridging element (30), and the second projecting formation (32) extends outwardly from the spacer portion (34) in opposite directions relative thereto.

12. A connecting arrangement according to claim 11, wherein the second projecting formation (32) has a leading surface (32A) and a securing region, the leading surface (32A) being the first region of the second projecting formation (32) to pass over the aforesaid portion of the support (14) when the attaching arrangement (26) is rotated to the attaching position, and wherein the attaching surface (32B) engages the support (14) when the attaching arrangement (26) is in the attaching position.

13. A connecting arrangement according to claim 12, wherein the gap (36) is larger at the leading surface (32A) than at the attaching surface (32B), the leading surface (32A) having a surface that tapers to the attaching surface (32B).

14. A connecting arrangement according to any of claims 9 to 11, wherein the stop formation (40) comprises diagonally opposite regions of the spacer portion (34), the distance between said regions being greater than the width of the aperture (22).

15. A connecting arrangement according to any of claims 9 to 14, wherein the spacer portion (34) has a curved edge to allow rotating of the attaching arrangement (26) relative to the support (14), the spacer portion (34) preferably having substantially diametrically opposed curved edges, the diametrical distance between said curved edges being less than the width of the aperture (22) in the support (14).

## Patentansprüche

1. Verfahren zum Aufhängen eines Rohrs von einem Träger (14), wobei das Verfahren Folgendes umfasst: Bereitstellen einer Verbindungsvorrichtung (10) und eines Trägers (14), umfassend ein Hauptteil (16), das eine Öffnung (22) definiert, wobei die Verbindungsvorrichtung (10) eine Sicherungsanordnung (24) zum Sichern der Verbindungsvorrichtung (10) an dem Rohr und eine Befestigungsanordnung (26) zum Befestigen der Verbindungsvorrichtung (10) an dem Träger (14) umfasst;
wobei die Befestigungsanordnung (26) eine erste hervorstehende Formation (28) zum Eingreifen in eine erste Fläche (20A) eines Teils des Trägers (14), eine zweite hervorstehende Formation (32) zum Eingreifen in eine zweite Fläche (20B) des Teils des Trägers (14) und ein Überbrückungselement (30) umfasst, das sich zwischen der ersten hervorstehenden Formation (28) und der Sicherungsanordnung (24) erstreckt;
wobei das Überbrückungselement (30) die Sicherungsanordnung (24) fest an der Befestigungsanordnung (26) montiert;
wobei die Befestigungsanordnung (26) ferner ein Distanzstück (34) einschließt, das sich zwischen der ersten und zweiten hervorstehenden Formation (32) erstreckt, wobei ein Spalt (36) zwischen der ersten und zweiten hervorstehenden Formation (32) definiert ist;
wobei das Verfahren das Einsetzen der zweiten hervorstehenden Formation (32) durch die Öffnung (22) in dem Träger (14) und danach das Drehen der Befestigungsanordnung (26) in eine Befestigungsposition um eine Drehachse (R) umfasst, die sich durch die erste und zweite hervorstehende Formation (32) erstreckt, um den Teil des Trägers (14) zwischen der ersten und zweiten hervorstehenden Formation (32) aufzunehmen, sodass die erste und zweite hervorstehende Formation (32) in die erste bzw. zweite Fläche (20B) eingreifen, wodurch die Befestigungsvorrichtung (10) an dem Träger (14) befestigt wird;
und wobei das Verfahren ferner das Sichern des Rohrs an der Sicherungsanordnung (24) umfasst;
**dadurch gekennzeichnet, dass** das Distanzstück (34) eine Halteformation (40) aufweist, um eine Drehung der Befestigungsanordnung (26) in eine Richtung zu verhindern, wobei die Halteformation (40) einen Bereich des Distanzstücks (34) umfasst, der konfiguriert ist, um in den Träger (14) einzugreifen, wenn die Befestigungsanordnung (26) in die oben genannte Richtung gedreht wird.

2. Verfahren nach Anspruch 1, wobei das Überbrückungselement (30) eine Mittelachse (M) aufweist, wobei die Drehachse (R) in Bezug auf die Mittelachse (M) des Überbrückungselements (30) versetzt ist, und wobei die Drehachse (R) im Wesentlichen parallel zu der Mittelachse (M) des Überbrückungselements (30) verläuft.

3. Verfahren nach Anspruch 1 oder 2, wobei sich die erste hervorstehende Formation (28) von dem Überbrückungselement (30) nach außen erstreckt und sich die zweite hervorstehende Formation (32) von dem Distanzstück (34) in entgegengesetzten Richtungen dazu nach außen erstreckt.

4. Verfahren nach Anspruch 3, wobei die zweite hervorstehende Formation (32) eine vordere Oberfläche (32A) und eine Befestigungsoberfläche (32B) aufweist, wobei die vordere Oberfläche (32A) dem ersten Bereich der zweiten hervorstehenden Formation (32) entspricht, der über den oben genannten Teil des Trägers (14) hinweggeht, wenn die Befestigungsanordnung (26) in die Befestigungsposition gedreht wird, und wobei die Befestigungsoberfläche (32B) in den Träger (14) eingreift, wenn sich die Befestigungsanordnung (26) in der Befestigungsposition befindet.

5. Verfahren nach Anspruch 4, wobei der Spalt (36) an der vorderen Oberfläche (32A) größer ist als an der Befestigungsoberfläche (32B), wobei die vordere Oberfläche (32A) eine Oberfläche aufweist, die sich zu der Befestigungsoberfläche (32B) hin verjüngt.

6. Verfahren nach einem der vorhergehenden Ansprüche, wobei die Halteformation (40) diagonal entgegengesetzte Bereiche des Distanzstücks (34) umfasst, wobei der Abstand zwischen den Bereichen größer ist als die Breite der Öffnung (22).

7. Verfahren nach einem der vorhergehenden Ansprüche, wobei das Distanzstück (34) eine gebogene Kante aufweist, um eine Drehung der Befestigungsanordnung (26) in Bezug auf den Träger (14) zu ermöglichen, wobei das Distanzstück (34) vorzugsweise im Wesentlichen diametral entgegengesetzte gebogene Kanten aufweist, wobei der diametrale Abstand zwischen den gebogenen Kanten kleiner ist als die Breite der Öffnung (22) in dem Träger (14).

8. Verfahren nach einem der vorhergehenden Ansprüche, wobei die erste hervorstehende Formation (28) im Wesentlichen kreisförmig ist und sich von dem Überbrückungselement (30) radial erstreckt und die zweite hervorstehende Formation (32) im Wesentlichen rechteckig ist und eine Breite aufweist, die größer ist als ihre Länge.

9. Verbindungsanordnung, umfassend:
eine Verbindungsvorrichtung (10) und einen Träger (14), umfassend ein Hauptteil (16), das eine Öffnung (22) definiert, wobei die Verbindungsvorrichtung (10) eine Sicherungsanordnung (24) zum Sichern der Verbindungsvorrichtung (10) an einem Rohr und eine Befestigungsanordnung (26) zum Befestigen der Verbindungsvorrichtung (10) an dem Träger (14) umfasst;
wobei die Befestigungsanordnung (26) eine erste hervorstehende Formation (28) zum Eingreifen in eine erste Fläche (20A) eines Teils des Trägers (14), eine zweite hervorstehende Formation (32) zum Eingreifen in eine zweite Fläche (20B) des Teils des Trägers (14) und ein Überbrückungselement (30) umfasst, das sich zwischen der ersten hervorstehenden Formation (28) und der Sicherungsanordnung (24) erstreckt;
wobei das Überbrückungselement (30) die Sicherungsanordnung (24) fest an der Befestigungsanordnung (26) montiert;
wobei die Befestigungsanordnung (26) ferner ein Distanzstück (34) einschließt, das sich zwischen der ersten und zweiten hervorstehenden Formation (32) erstreckt, sodass ein Spalt (36) zwischen der ersten und zweiten hervorstehenden Formation (32) definiert ist;
wobei die zweite hervorstehende Formation (32) durch die Öffnung (22) in dem Träger (14) eingesetzt werden kann und wenn sie so eingesetzt ist, ist die Befestigungsanordnung (26) in die Befestigungsposition um eine Drehachse (R) drehbar, die sich durch die erste und zweite hervorstehende Formation (32) erstreckt, um den Teil des Trägers (14) zwischen der ersten und zweiten hervorstehenden Formation (32) aufzunehmen, sodass die erste und zweite hervorstehende Formation (32) in die erste bzw. zweite Fläche (20B) eingreifen, wodurch die Verbindungsvorrichtung (10) an dem Träger (14) befestigt wird;
**dadurch gekennzeichnet, dass** das Distanzstück (34) eine Halteformation (40) aufweist, um eine Drehung der Befestigungsanordnung (26) in eine Richtung zu verhindern, wobei die Halteformation (40) einen Bereich des Distanzstücks (34) umfasst, der konfiguriert ist, um in den Träger (14) einzugreifen, wenn die Befestigungsanordnung (26) in die oben genannte Richtung gedreht wird.

10. Verbindungsanordnung nach Anspruch 9, wobei das Überbrückungselement (30) eine Mittelachse (M) aufweist, wobei die Drehachse (R) in Bezug auf die Mittelachse (M) des Überbrückungselements (30) versetzt ist, und wobei die Drehachse (R) im Wesentlichen parallel zu der Mittelachse (M) des Überbrückungselements (30) verläuft.

11. Verbindungsanordnung nach Anspruch 9 oder 10, wobei sich die erste hervorstehende Formation (28) von dem Überbrückungselement (30) nach außen erstreckt und sich die zweite hervorstehende Formation (32) von dem Distanzstück (34) in entgegengesetzten Richtungen dazu nach außen erstreckt.

12. Verbindungsanordnung nach Anspruch 11, wobei die zweite hervorstehende Formation (32) eine vordere Oberfläche (32A) und einen Sicherungsbereich aufweist, wobei die vordere Oberfläche (32A) dem ersten Bereich der zweiten hervorstehenden Formation (32) entspricht, der über den oben genannten Teil des Trägers (14) hinweggeht, wenn die Befestigungsanordnung (26) in die Befestigungsposition gedreht wird, und wobei die Befestigungsoberfläche (32B) in den Träger (14) eingreift, wenn sich die Befestigungsanordnung (26) in der Befestigungsposition befindet.

13. Verbindungsanordnung nach Anspruch 12, wobei der Spalt (36) an der vorderen Oberfläche (32A) größer ist als an der Befestigungsoberfläche (32B), wobei die vordere Oberfläche (32A) eine Oberfläche aufweist, die sich zu der Befestigungsoberfläche (32B) hin verjüngt.

14. Verbindungsanordnung nach einem der Ansprüche 9 bis 11, wobei die Halteformation (40) diagonal entgegengesetzte Bereiche des Distanzstücks (34) umfasst, wobei der Abstand zwischen den Bereichen größer ist als die Breite der Öffnung (22).

15. Verbindungsanordnung nach einem der Ansprüche 9 bis 14, wobei das Distanzstück (34) eine gebogene Kante aufweist, um eine Drehung der Befestigungsanordnung (26) in Bezug auf den Träger (14) zu ermöglichen, wobei das Distanzstück (34) vorzugsweise im Wesentlichen diametral entgegengesetzte gebogene Kanten aufweist, wobei der diametrale Abstand zwischen den gebogenen Kanten kleiner ist als die Breite der Öffnung (22) in dem Träger (14).

## Revendications

1. Procédé de suspension d'un tuyau à un support (14), le procédé comprenant : la fourniture d'un dispositif de raccord (10) et d'un support (14) comprenant une partie principale (16) définissant une ouverture (22), le dispositif de raccord (10) comprenant un agencement de fixation (24) pour fixer le dispositif de raccord (10) au tuyau, et un agencement d'attache (26) pour attacher le dispositif de raccord (10) au support (14) ;
dans lequel l'agencement d'attache (26) comprend une première formation saillante (28) pour venir en prise avec une première face (20A) d'une partie du support (14), une deuxième formation saillante (32) pour venir en prise avec une seconde face (20B) de ladite partie du support (14) et un élément de pontage (30) s'étendant entre la première formation saillante (28) et l'agencement de fixation (24) ;
dans lequel l'élément de pontage (30) assemble fixement l'agencement de fixation (24) à l'agencement d'attache (26) ;
dans lequel l'agencement de fixation (26) comprend en outre une partie d'espacement (34) s'étendant entre les première et deuxième formations saillantes (32), un espace (36) étant défini entre les première et deuxième formations saillantes (32) ;
dans lequel le procédé comprend l'insertion de la deuxième formation saillante (32) à travers l'ouverture (22) dans le support (14), puis la rotation de l'agencement d'attache (26) vers une position d'attache autour d'un axe de rotation (R) s'étendant à travers les première et deuxième formations saillantes (32), pour recevoir ladite partie du support (14) entre les première et deuxième formations saillantes (32) de sorte que les première et deuxième formations saillantes (32) viennent respectivement en prise avec les première et seconde faces (20B), attachant ainsi le dispositif de raccord (10) au support (14) ;
et dans lequel le procédé comprend en outre la fixation du tuyau à l'agencement de fixation (24) ;
**caractérisé en ce que** la partie d'espacement (34) a une formation d'arrêt (40) pour empêcher la rotation de l'agencement d'attache (26) dans une direction, la formation d'arrêt (40) comprenant une région de la partie d'espacement (34) configurée pour venir en prise avec le support (14) lorsque l'agencement d'attache (26) est tourné dans la direction susmentionnée.

2. Procédé selon la revendication 1, dans lequel l'élément de pontage (30) a un axe central (M), l'axe de rotation (R) étant décalé par rapport à l'axe central (M) de l'élément de pontage (30), et dans lequel le l'axe de rotation (R) est sensiblement parallèle à l'axe central (M) de l'élément de pontage (30).

3. Procédé selon la revendication 1 ou 2, dans lequel la première formation saillante (28) s'étend vers l'extérieur depuis l'élément de pontage (30), et la seconde formation saillante (32) s'étend vers l'extérieur depuis la partie d'espacement (34) dans des directions opposées par rapport à celle-ci.

4. Procédé selon la revendication 3, dans lequel la deuxième formation saillante (32) a une surface d'attaque (32A) et une surface d'attache (32B), la surface d'attaque (32A) étant la première région de la deuxième formation saillante (32) à passer sur la partie susmentionnée du support (14) lorsque l'agencement d'attache (26) est tourné vers la position d'attache, et dans lequel la surface d'attache (32B) vient en prise avec le support (14) lorsque l'agencement d'attache (26) est dans la position d'attache.

5. Procédé selon la revendication 4, dans lequel l'espace (36) est plus grand au niveau de la surface d'attaque (32A) qu'à la surface d'attache (32B), la surface d'attaque (32A) ayant une surface qui se rétrécit vers la surface d'attache (32B).

6. Procédé selon l'une quelconque des revendications précédentes, dans lequel la formation d'arrêt (40) comprend des régions diagonalement opposées de la partie d'espacement (34), la distance entre lesdites régions étant supérieure à la largeur de l'ouverture (22).

7. Procédé selon l'une quelconque des revendications précédentes, dans lequel la partie d'espacement (34) a un bord incurvé pour permettre la rotation de l'agencement d'attache (26) par rapport au support (14), la partie d'espacement (34) ayant de préférence des bords incurvés sensiblement diamétralement opposés, la distance diamétrale entre lesdits bords incurvés étant inférieure à la largeur de l'ouverture (22) dans le support (14).

8. Procédé selon l'une quelconque des revendications précédentes, dans lequel la première formation saillante (28) est sensiblement circulaire et s'étend radialement à partir de l'élément de pontage (30), et la deuxième formation saillante (32) est sensiblement rectangulaire ayant une largeur supérieure à sa longueur.

9. Agencement de raccords, comprenant :
un dispositif de raccord (10) et un support (14) comprenant une partie principale (16) définissant une ouverture (22), le dispositif de raccord (10) comprenant un agencement de fixation (24) pour fixer le dispositif de raccord (10) à un tuyau et un agencement d'attache (26) pour attacher le dispositif de raccord (10) au support (14) ;
dans lequel l'agencement d'attache (26) comprend une première formation saillante (28) pour venir en prise avec une première face (20A) d'une partie du support (14), une deuxième formation saillante (32) pour venir en prise avec une seconde face (20B) de ladite partie du support (14) et un élément de pontage (30) s'étendant entre la première formation saillante (28) et l'agencement de fixation (24) ;
dans lequel l'élément de pontage (30) assemble fixement l'agencement de fixation (24) à l'agencement d'attache (26) ;
dans lequel l'agencement d'attache (26) comprend en outre une partie d'espacement (34) s'étendant entre les première et deuxième formations saillantes (32) de sorte qu'un espace (36) est défini entre les première et deuxième formations saillantes (32) ;
dans lequel la deuxième formation saillante (32) peut être insérée à travers l'ouverture (22) dans le support (14), et lorsqu'elle est ainsi insérée, l'agencement d'attache (26) peut tourner jusqu'à la position d'attache autour d'un axe de rotation (R) s'étendant à travers les première et deuxième formations saillantes (32), pour recevoir ladite partie du support (14) entre les première et deuxième formations saillantes (32) de sorte que les première et deuxième formations saillantes (32) viennent respectivement en prise avec les première et deuxième faces (20B), attachant ainsi le dispositif de raccord (10) au support (14) ;
**caractérisé en ce que** la partie d'espacement (34) a une formation d'arrêt (40) pour empêcher la rotation de l'agencement d'attache (26) dans une direction, la formation d'arrêt (40) comprenant une région de la partie d'espacement (34) configurée pour venir en prise avec le support (14) lorsque l'agencement d'attache (26) est tourné dans la direction susmentionnée.

10. Agencement de raccord selon la revendication 9, dans lequel l'élément de pontage (30) a un axe central (M), l'axe de rotation (R) étant décalé par rapport à l'axe central (M) de l'élément de pontage (30), et dans lequel l'axe de rotation (R) est sensiblement parallèle à l'axe central (M) de l'élément de pontage (30).

11. Agencement de raccord selon la revendication 9 ou 10, dans lequel la première formation saillante (28) s'étend vers l'extérieur à partir de l'élément de pontage (30), et la deuxième formation saillante (32) s'étend vers l'extérieur à partir de la partie d'espacement (34) dans des directions opposées par rapport à celle-ci.

12. Agencement de raccord selon la revendication 11, dans lequel la deuxième formation saillante (32) a une surface d'attache (32A) et une région de fixation, la surface d'attaque (32A) étant la première région de la deuxième formation saillante (32) pour passer sur la partie susmentionnée du support (14) lorsque l'agencement d'attache (26) est tourné vers la position d'attache, et dans lequel la surface d'attache (32B) vient en prise avec le support (14) lorsque l'agencement d'attache (26) est dans la position d'attache.

13. Agencement de raccord selon la revendication 12, dans lequel l'espace (36) est plus grand au niveau de la surface d'attaque (32A) qu'au niveau de la surface d'attache (32B), la surface d'attaque (32A) ayant une surface qui se rétrécit vers la surface d'attache (32B).

14. Agencement de raccord selon l'une quelconque des revendications 9 à 11, dans lequel la formation d'arrêt (40) comprend des régions diagonalement opposées de la partie d'espacement (34), la distance entre lesdites régions étant supérieure à la largeur de l'ouverture (22).

15. Agencement de raccord selon l'une quelconque des revendications 9 à 14, dans lequel la partie d'espacement (34) a un bord incurvé pour permettre la rotation de l'agencement d'attache (26) par rapport au support (14), la partie d'espacement (34) ayant de préférence des bords diamétralement opposés sensiblement incurvés, la distance diamétrale entre lesdits bords incurvés étant inférieure à la largeur de l'ouverture (22) dans le support (14).
